# EUROPÄISCHE PATENTSCHRIFT

(11) **EP 3 911 790 B1**
(45) Veröffentlichungstag und Bekanntmachung des Hinweises auf die Patenterteilung: **06.12.2023**
(21) Anmeldenummer: 20701534.8
(22) Anmeldetag: 09.01.2020
(51) Int. Cl.: D04H 1/46, D04H 1/58, D04H 18/02, B32B 5/02, B32B 5/18, B32B 5/06, B32B 5/24, B32B 5/26

(54) **KRAFTFAHRZEUG-BODENVERKLEIDUNG, GEPÄCKRAUMVERKLEIDUNG ODER LADEBODENVERKLEIDUNG MIT STRUKTURGENADELTER TEPPICH-OBERFLÄCHE**
MOTOR VEHICLE FLOOR COVERING, BOOT OR TRUNK COVERING OR LOAD COMPARTMENT COVERING HAVING A STRUCTURALLY NEEDLE-PUNCHED CARPET SURFACE
REVÊTEMENT SOUS CAISSE, REVÊTEMENT DE COFFRE À BAGAGES OU REVÊTEMENT DE PLANCHER DE CHARGEMENT DE VÉHICULE À MOTEUR, AVEC UNE SURFACE TAPIS DE STRUCTURE AIGUILLETÉE

(30) Priorität: 15.01.2019 DE 102019100916
(43) Veröffentlichungstag der Anmeldung: 24.11.2021
(73) Patentinhaber: Adler Pelzer Holding GmbH, 58099 Hagen (DE)
(72) Erfinder: FALK, Frank, 72459 Albstadt (DE); SCHULZE, Volkmar, 84069 Schierling (DE)
(74) Vertreter: Hannke Bittner & Partner mbB Regensburg
(86) Internationale Anmeldenummer: PCT/EP2020/050378
(87) Internationale Veröffentlichungsnummer: WO 2020/148145

(56) Entgegenhaltungen:
- WO-A1-2011/045691
- WO-A1-2018/210852
- DE-A1- 3 904 526

## Beschreibung

Gegenstand der Erfindung ist ein Verfahren zur Herstellung einer dreidimensional geformten Bodenverkleidung, Gepäckraumverkleidung oder Ladebodenverkleidung für Kraftfahrzeuge, deren Teppich-Oberfläche sichtseitig eine genadelte Struktur aufweist sowie die Verkleidungen selbst.

Das Oberflächenmaterial für ein Kraftfahrzeug selbst ist ein FlachNadelvlies-Teppich, der mit mehreren Unterschichten versehen sein kann sowie eine Schaum- oder Faser-/Vlies-Isolation zur Karosserie hin, haben kann.

Insbesondere durch die Entwicklung von E-Kraftfahrzeugen sucht man im Design/Styling nach alternativen Lösungen in der verformbaren Teppichoberfläche im Vergleich zum einfarbigen, glatten Flachnadelvlies-, Velours- und Tuftingteppich.

Bei Kraftfahrzeugen mit Hecktür (Kombis) und umklappbarer Rücksitzlehne trifft dieses Styling insbesondere auch auf den Gepäckraum und den Ladeboden zu, da man bei geöffneter Hecktür und umgeklappten Rücksitzlehnen von hinten in den damit freigegebenen Innenraum des Kraftfahrzeuges schaut. Beides, Gepäck- und Fahrgastraum, müssen dann ein einheitliches, in sich stimmiges Styling verkörpern.

Im Stand der Technik sind verschiedene Ausführungen von Teppich-Oberwaren bei Kraftfahrzeug-Bodenverkleidungen, Gepäckraumverkleidungen sowie Ladebodenverkleidungen bekannt, nämlich insbesondere Tufting-, Velours- und Flachnadelvlies-Teppiche.

Bei Tufting-Teppichen wird insbesondere PA6.6, PA6, PP, rPA und PET, rPET sowie die entsprechenden bio-basierenden Polyamide (PA 5.10; PA 6.10); und bei den Velours- und Flachnadelvlies-Teppichen PET, PET/PP, PP, PA/PET und rPET vorwiegend als Garn-/Fasermaterial eingesetzt.

Im Stand der Technik sind Verfahren zur Herstellung von Velours-Teppichen bekannt, siehe unter anderem DE 44 09 771 A1, DE 29 00 935 C2 und DE 10 2008 026 968 A1.

Ein Velours-Vlies ist ein veredeltes Nadelvlies, bei dem bei einem vorgefertigten Vliesmaterial mittels Vernadelung in ein laufendes homogenes Bürstenband, ein Faserpol erzeugt wurde. Wenn das dann noch auf definierte Flor-/Polhöhe geschoren ist, spricht man von einem Schervelours.

Ein Velours-Teppich unterscheidet sich von einem Nadelvlies-Teppich durch eine hochwertigere Optik und Haptik, sowie ein verbessertes Verschleißverhalten.

Zur Homogenisierung des Einstichbildes bei einem vernadelten Vlies sind in US 9 567 698 B2, US 2016/0069006 A1, US 9 260 806 B2, US 2015/0259836 A1 und EP 2 918 719 A1 spezielle Verfahren beschrieben. Bei der Herstellung eines flachen Nadelvlieses werden Stapelfasern nach einer Vliesbildung mittels Krempel und Kreuzleger über vielfaches Vernadeln zwischen zwei Metallplatten verfestigt. In einem weiteren Arbeitsschritt mittels nochmaliger Vernadelung in ein Bürstenband, kann aus diesem flachen Nadelvlies ein Veloursnadelvlies erzeugt werden. Bei beiden Varianten ist es für eine gute Endfestigkeit notwendig, die Stapelfasen nach dem Vernadeln thermisch oder chemisch einzubinden.

Die Einbindung der Fasern erfolgt größtenteils mittels geschäumten Latex oder Acrylat. Ein kombinierter Einsatz von Latex oder Acrylat und BiCo-Faser (coPET/PET-Bikomponentenfaser) ist in praxi ebenfalls üblich. Des Weiteren wird die Einbindung auch ausschließlich über BiCo-Faser realisiert.

Speziell in WO 2017/061970 A1 wird auf das Einbinden des Teppichs mittels Bikomponenten (BiCo)-Fasern eingegangen. Hier wird die Optimierung der (BiCo-)Faserfixierung durch den Einsatz spezieller Schlitzdüsen im Trockenofen beschrieben. Daneben sind bekannt: aufgestreutes PE, EVA/PE-Gemisch, auf-extrudiertes PE, Folien, Heißkleber, thermoplastische Dispersionen und das Thermobonding (EP 1 598 476 B1).

In der DE 2 008 439 C [US 3 755 055] wird ein Verfahren beschrieben, bei dem eine einfarbige oder melangierte Vliesstoffbahn und eine mit Pigmentfarbstoffen mit einem ornamentalen Muster ein- oder mehrfarbig einseitig bedruckte Vliesstoffbahn aufeinandergelegt werden, wobei die bedruckte Seite der einen Vliesstoffbahn der unbedruckten Vliesstoffbahn abgekehrt ist, und danach beide Vliesstoffbahnen von der unbedruckten Fläche her soweit durchgenadelt werden, dass sich die Fasern der unbedruckten Vliesstoffbahn mit den Fasern der bedruckten Vliesstoffbahn unter Bildung eines Flores auf deren bedruckter Fläche vermischen und deren aufgedrucktes ornamentales Muster zu einem weichen und dreidimensional wirkenden Muster verändert wird.

Die DE 39 04 526 A1 offenbart einen Bodenbelag und ein Verfahren zu seiner Herstellung. Zur Herstellung eines Bodenbelages aus zwei Schichten aus Nadelvlies, von denen die Oberschicht an ihrer Oberseite strukturiert ist, wird die Unterschicht von der Unterseite der strukturierten Oberschicht her in diese eingenadelt. Dabei ist die Nadeltiefe wesentlich geringer als die Stärke der Oberschicht. Durch das Zusammennadeln der beiden Schichten von der Rückseite der Oberschicht her wird die Struktur dieser Oberschicht nicht zerstört. Anschließend an das Zusammennadeln erfolgt ein zusätzliches Verbinden beider Schichten durch Imprägnieren mit einem Bindemittel durch die Oberschicht hindurch.

In EP 0 888 743 A1 [US 2002/0029445 A1, US 6 287 407 B1, US 6 398 895 B1] wird ein strukturiertes Textilmaterial aus mindestens zwei verschiedenen Basisvliesen für den Bereich Reinigungstextilien beschrieben. Die technische Lehre betrifft ein strukturiertes Textilmaterial aus mindestens zwei verschiedenen vernadelten Basisvliesen, wobei die Basisvliese eine durch Nadelung von mindestens einer Seite erhaltene Struktur aufweisen, wobei die zur Strukturnadelung verwendeten Nadeln Gabel- oder Kronennadeln sind und die Tiefe der Gabeln beziehungsweise der Bärte so gewählt ist, dass sich diese beim Durchstich vollständig mit Fasern des den Nadeln zugewandten Basisvlieses füllen und wobei das Textilmaterial im Muster, im Fond und auf der Rückseite unvermischte, reine Fasern aufweist. Im Verfahren zur Herstellung des strukturierten Textilmaterials wird zum einen angeführt, dass eine Kaschierung der beiden Schmelzfasern aufweisenden vernadelten Basisvliese ohne Aktivierung der Schmelzfasern erfolgt, dass anschließend eine ein- oder zweiseitige Strukturnadelung erfolgt, und dass die Schmelzfasern der Basisvliese nach der Strukturnadelung aktiviert werden; und zum anderen, dass vor dem Einlauf in eine Strukturnadelmaschine zwischen die beiden Schmelzfasern aufweisenden vernadelten Basisvliese eine Zwischenlage aus einem eine Klebung der beiden Basisvliese vermögenden Werkstoffe, insbesondere ein Klebevlies, eingebracht wird, dass die beiden Basisvliese und die Zwischenlage miteinander einer ein- oder zweiseitigen Strukturnadelung unterworfen werden, und dass anschließend die Verbindung der beiden Basisvliese und der Zwischenlage durch Aktivierung der Schmelzfasern und der Zwischenlage hergestellt wird.

In WO 2011/045691 A1 wird ein graphischer Veloursteppich und dessen Herstellung beschrieben. Anwendung finden hierbei zwei Strukturierungsmaschinen besetzt mit jeweils 2 Nadelbrettern; und ein Basis- und einen Obervliesstoff. Das Basisvlies wird zwischen den zwei Strukturierungsmaschinen auf das Obervlies zugeführt und in der zweiten Strukturierungsmaschine zu einem Vlies vernadelt. Die Nadeln in den Nadelbrettern sind nach vorbestimmten Mustern angeordnet. Auf das Basisvlies ist ein Klebstoff aufgebracht, der dann die Fasern der Vliesschichten fixiert/einbindet.

Weiterhin ist bekannt, Muster in einer Nadelfilzbahn mittels mehrerer Komponenten, Faserschichten und mehrerer Nadelungsvorgänge zu erzeugen, siehe u.a. DE 103 46 473 A1 und WO 2011/065851 A1.

In der DE 20 2009 000 775 U1 wird ein Faserflächengebilde dargelegt, das aus einem Nadelvliesstoff bzw. Faserflor (Oberflächenschicht) auf der Sichtseite und einem Faserflor bzw. Faservlies (Musterschicht), welche durch Vernadelung mittels unterschiedlicher Nadeltypen/Nadelarten und/oder Nadelanordnungen und/oder Einstichrichtungen und/oder Einstichtiefen miteinander verbunden sind, besteht. Die Musterschicht ist vorbearbeitet, die Musterschicht unterscheidet sich von der Oberflächenschicht in den Fasern selbst und der Faserfärbung; auch ist die Musterschicht vor dem Vernadeln mit der Oberflächenschicht ausgestanzt und/oder ausgeschnitten worden; sowie ist gefärbt und/oder bedruckt. Des Weiteren werden mehrere unterschiedliche Musterflore bzw. Mustervliese als Musterschicht eingesetzt. Die Oberflächenschicht ist rückvernadelt und oberflächenbehandelt.

Alle im Stand der Technik beschriebenen, "strukturgenadelten" Anwendungen, Verfahren und Vorrichtungen sowie Materialstrukturen betreffen nicht (einlagige) Flachnadelvlies-Teppiche für die Nutzung im Kraftfahrzeug, deren dreidimensionale Verformung zu Kraftfahrzeug-Bodenverkleidungen, Gepäckraumverkleidungen oder Ladebodenverkleidungen. Es wird nicht von einer zerstörungsfreien Struktur berichtet, die bei einer dreidimensionalen Verformung im Kontaktheizfeld (Kaschierpresse), Strahlerheizfeld und im Verformungswerkzeug selbst ihre Oberflächenstruktur strapazierfähig behält.

Die Aufgabe der vorliegenden Erfindung gegenüber dem vorgenannten Stand der Technik ist somit die Bereitstellung eines verformungsgerechten, strukturgenadelten Teppichs, der den Fahrgast- und/oder Gepäckraum und/oder Laderaum von Kraftfahrzeugen dahin aufwertet, dass dieser eine "Wohnzimmer-/ Wohlfühl-Atmosphäre" aufweist. Insbesondere ist es Aufgabe der Erfindung bei der Herstellung/Vernadelung von Nadelvlies-Teppich ein bleibendes, strapazierfähiges Oberflächenmuster mit einer gegebenenfalls dreidimensionalen Struktur einzubringen, das über die Breite der Teppichoberfläche unterschiedlich strukturiert ist und einer dreidimensionalen Verformung zu einer Kraftfahrzeug-Boden- oder Gepäckraumverkleidung standhält.

Gegenstand der vorliegenden Erfindung ist in einer ersten Ausführungsform ein Verfahren zur Herstellung eines dreidimensional verformbaren Nadelvlies-Teppichs für eine Bodenverkleidung, Gepäckraumverkleidung oder Ladebodenverkleidung eines Kraftfahrzeuges mit strukturgenadelter, verformungsstabiler Oberfläche mit einer Grammatur der Verkleidung im Bereich von 180 g/m² bis 700 g/m², die dadurch gekennzeichnet ist, dass man
zwei oder mehrere Nadeltypen segmentweise über die Breite eines Nadelbrettes anordnet,
bei einer definierten Einstellung des Vorschubs/Hubes des Ausgangsvlieses sowie einer definierten Einstellung der Einstichtiefe die strukturierte Verkleidungsoberfläche aus dem Ausgangsvlies durch Vernadelung herstellt, und
die Verkleidung mit einer oder mehreren Unterschichten versieht und verformt wird und wobei man Nadeln einsetzt, die sich durch unterschiedliche Feinheit, Kerbenabstand, Kerbengröße, Arbeitsteilgeometrie und Distanz von Spitze zur 1. Kerbe unterscheiden.

Kern der vorliegenden Erfindung ist somit die Bereitstellung eines, in einem üblichen Standardverfahren hergestellten Nadelvlies-Teppichs zur Herstellung einer Bodenverkleidung, einer Gepäckraumverkleidung oder einer Ladebodenverkleidung eines Kraftfahrzeuges mit strukturgenadelter, verformungsgerechter Sichtoberfläche allein durch die Anordnung von unterschiedlichen Nadeln/Nadelgeometrien über die Breite des Nadelbrettes und/oder der Nadelbretter die zur Vernadelung der Bodenverkleidung, der Gepäckraumverkleidung oder der Ladebodenverkleidung eines Kraftfahrzeuges genutzt werden. Die Bestückung der Nadelbretter über die Breite erfolgt dabei mit vorab definierten Nadeltypen/- geometrien, die somit eine vorbestimmte gegebenenfalls dreidimensionale Struktur der Nadelvlies-Oberfläche erzeugen. Vorzugsweise werden Nadeln gleicher Länge, aber mit unterschiedlicher Feinheit, Kerbenabstand, Kerbengröße, Arbeitsteilgeometrie und Distanz von Spitze zur 1. Kerbe eingesetzt.

Der Vorteil der vorliegenden Erfindung besteht in der Bereitstellung von verformungsgerechtem/-stabilen, strukturgenadeltem Nadelvlies-Teppich für die Herstellung von Kraftfahrzeug-Boden- und Gepäckraumverkleidungen oder Ladebodenverkleidung ohne einen zusätzlichen Arbeitsschritt bei dessen Herstellung im Vergleich zur Standard-Nadelvlies-Teppich-Produktion.

Die zunächst erzeugte Rollen- oder Platinenware weist beispielsweise Bereiche mit unterschiedlicher Flauschigkeit oder Steifigkeit in Maschinenrichtung auf.

Das Verfahren der vorliegenden Erfindung ist umsetzbar -ohne zusätzliche Vliesschichten, Vernadelungsstufen, Nadelmaschinen bzw. Nadelbretter- in "Standard"-Anlagen allein durch die Nadelgeometrie/Nadeltype der über die Breite des Nadelbrettes angeordneten Nadeln.

Eine weitere Ausführungsform der vorliegenden Erfindung besteht in einem dreidimensional geformten Nadelvlies einer Bodenverkleidung, einer Gepäckraumverkleidung oder einer Ladebodenverkleidung eines Kraftfahrzeuges mit strukturgenadelter, verformungsstabiler Oberfläche mit einer Grammatur der Verkleidung im Bereich von 180 g/m² bis 700 g/m², weiterhin umfassend eine oder mehrere Unterschichten, wobei die Sichtseite der Bodenverkleidung, der Gepäckraumverkleidung oder der Ladebodenverkleidung eine dreidimensionale strukturgenadelte, strapazierfähige Oberfläche hergestellt nach dem oben beschriebenen Verfahren aufweist.

Die Realisierung soll vorzugsweise zum einen bei einem einlagigen und zum anderen bei einem zweilagigen Nadelvlies-Teppich erfolgen. Bei einer zweilagigen Ausführung können hierbei zusätzlich Farbeffekte unterschiedlicher Struktur eingenadelt werden.

Ausführungsbeispiel:
Zur Herstellung einer verformungsgerechten/-stabilen, strukturgenadelte Bodenverkleidung wurde als Ausgangsvlies ein Vorvlies aus 7 dtex 100% PES Fasern mit der Länge 64 mm genutzt; die Grammatur betrug 400 g/m².

Das Nadelbrett war in Querrichtung in vier verschiedene Segmente aufgeteilt:
Nadeltyp 1(fein) - Nadeltyp 2 (grob) - Nadeltyp 1 (fein) - Nadeltyp 2 (grob)

Verwendet wurden handelsübliche Nadeln der Firma Groz-Beckert KG, Albstadt, Deutschland:

| | | | |
|---|---|---|---|
| Nadeltyp 1: | 15x18x43x3 | R222 G | 2017 |
| Nadeltyp 2: | 15x18x36x3 | R333 G | 2007 |

Diese Nadeln unterscheiden sich in der Feinheit, Kerbenanzahl, Kerbengröße und Distanz von Spitze zur 1. Kerbe.

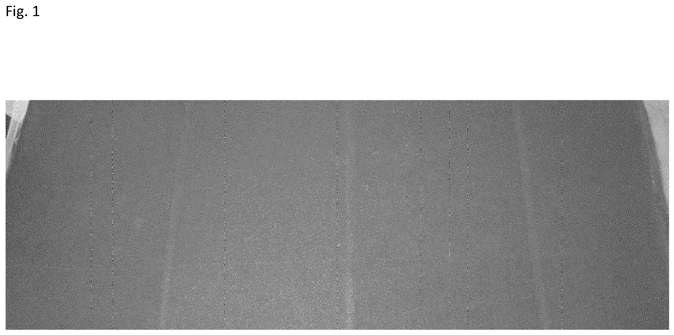

Bei der Herstellung war es seitens der Maschineneinstellungen erforderlich, die optimale Einstichtiefe und den optimalen Vorschub/Hub durch Probieren zu finden. Bei dem in Fig. 1 dargestellten Nadelvlies-Teppichboden waren das: Vorschub/Hub 1,55 mm/Hub und die Einstichtiefe 12 mm.

Der so hergestellte strukturgenadelte Nadelvlies-Teppichboden wurde anschließend mit 80 g/m² handelsüblichem Latex eingebunden und mit 80 g/m² handelsüblichem PE beschichtet.

Anschließend wurde der Nadelvlies-Teppichboden mit den Unterschichten (a) Schwerfolie 2,5 kg/m² und (b) einem Folienvlies 150 g/m² zu einer Bodenverkleidungs-Oberware eines Mittelklasse-Fahrzeugs bei den Prozeßparametern Kontaktheizfeld 185°C/180°C, 58sec; Strahlerheizfeld 150°C und einer Werkzeugschließzeit von 68sec bei der Werkzeugoberflächentemperatur von 5°C verformt.

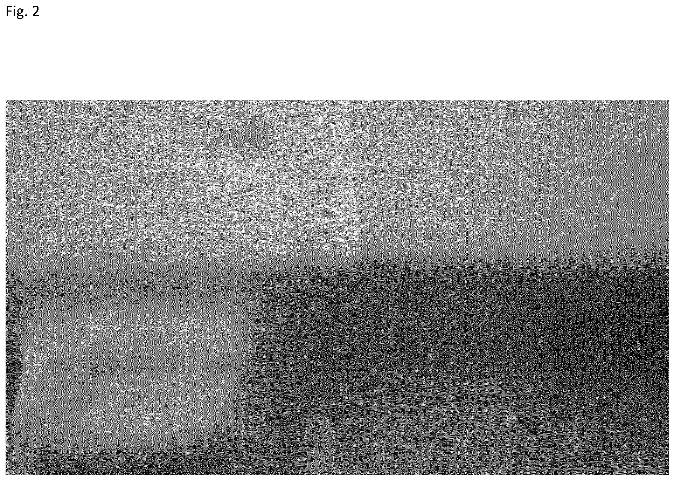

In Fig. 2 ist ein Ausschnitt der verformten Bodenverkleidungs-Oberware dargestellt. Deutlich ist die Strukturierung, feine Nadel = flauschig, grobe Nadel = streifig, zu erkennen. Der Streifen dazwischen war nur vorvernadelt.

Speziell in Fig. 2 ist zu erkennen, dass die Strukturnadelung des Teppichs verformungsgerecht und verformungsstabil ist.

Durch die Wahl der Nadelkombinationen konnte man die Teppich-Strukturierung verschiedenartig kombinieren.

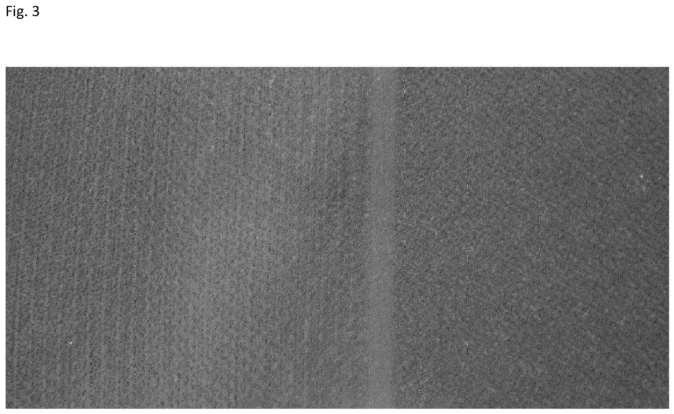

In Fig. 3 ist dazu ein weiteres Beispiel dargestellt:

| | |
|---|---|
| Nadeltyp 1: | 15x25x32x3 ½ R333 G3012 |
| Nadeltyp 2: | 15x20x3 ½ C333 G3012 |
| Vorschub/Hub: | 7,99 mm/Hub |
| Einstichtiefe: | 12 mm |

## Patentansprüche

1. Verfahren zur Herstellung eines dreidimensional verformbaren Nadelvlies-Teppichs für eine Bodenverkleidung, Gepäckraumverkleidung oder Ladebodenverkleidung eines Kraftfahrzeuges mit strukturgenadelter, verformungsstabiler Oberfläche mit einer Grammatur der Verkleidung im Bereich von 180 g/m² bis 700 g/m²,
**dadurch gekennzeichnet, dass**
man zwei oder mehrere Nadeltypen segmentweise über die Breite eines Nadelbrettes anordnet, bei einer definierten Einstellung des Vorschubs/Hubes des Ausgangsvlieses sowie einer definierten Einstellung der Einstichtiefe die strukturierte Verkleidungsoberfläche aus dem Ausgangsvlies herstellt, und die Verkleidung mit mehreren Unterschichten versieht und verformt wird und wobei man Nadeln einsetzt, die sich durch unterschiedliche Feinheit, Kerbenabstand, Kerbengröße, Arbeitsteilgeometrie und Distanz von Spitze zur 1. Kerbe unterscheiden.

2. Dreidimensional geformter Nadelvlies für eine Bodenverkleidung, eine Gepäckraumverkleidung oder eine Ladebodenverkleidung eines Kraftfahrzeuges mit strukturgenadelter, verformungsstabiler Oberfläche mit einer Grammatur der Verkleidung im Bereich von 180 g/m² bis 700 g/m², weiterhin umfassend mehrere Unterschichten,
**dadurch gekennzeichnet, dass**
die Sichtseite der Bodenverkleidung, der Gepäckraumverkleidung oder der Ladebodenverkleidung eine dreidimensionale strukturgenadelte, strapazierfähige Oberfläche hergestellt nach dem Verfahren von Anspruch 1 aufweist

## Claims

1. Method of producing a three-dimensionally deformable nonwoven carpet for a floor lining, luggage compartment lining or loading floor lining of a motor vehicle with a structurally needled, deformation-resistant surface having a grammage of the lining in the range from 180 g/m² to 700 g/m², **characterized in that**
two or more needle types are arranged in segments over the width of a needle board, the structured lining surface is produced from the starting nonwoven at a defined setting of the feed/stroke of the starting nonwoven and a defined setting of the penetration depth, and the lining is provided with several underlayers and is formed, and wherein needles are used which differ in terms of fineness, notch spacing, notch size, working part geometry and distance from the tip to the first notch.

2. Three-dimensionally shaped needle nonwoven for a floor lining, a luggage compartment lining or a loading floor lining of a motor vehicle with a structurally needled, deformation-resistant surface having a grammage of the lining in the range from 180 g/m² to 700 g/m², further comprising several sublayers,
**characterized in that**
the visible side of the floor lining, the luggage compartment lining or the loading floor lining has a three-dimensional structurally needled, hard-wearing surface produced by the method of claim 1.

## Revendications

1. Procédé de fabrication d'un tapis aiguilleté déformable en trois dimensions pour un revêtement de sol, un revêtement de coffre à bagages ou un revêtement de plancher de chargement d'un véhicule automobile avec une surface structurée et stable à la déformation avec un grammage du revêtement dans la plage de 180 g/m² à 700 g/m², **caractérisé en ce que**
deux ou plusieurs types d'aiguilles par segments sont disposés sur la largeur d'une planche à aiguilles, la surface de revêtement structurée est réalisée à partir du non-tissé de départ avec un réglage défini de l'avance/de la course du non-tissé de départ ainsi qu'un réglage défini de la profondeur de piqûre, et le revêtement est muni de plusieurs sous-couches et on le déforme, et on utilise des aiguilles qui se distinguent par une finesse, une distance d'encoche, une taille d'encoche, une géométrie de la partie de travail et une distance de la pointe à la première encoche différentes.

2. Non-tissé aiguilleté formé en trois dimensions pour un revêtement de sol, un revêtement de coffre à bagages ou un revêtement de plancher de chargement d'un véhicule automobile, avec une surface structurée aiguilletée, stable à la déformation, avec un grammage du revêtement dans la plage de 180 g/m² à 700 g/m², comprenant en outre plusieurs sous-couches,
**caractérisé en ce que**
la face visible du revêtement de sol, du revêtement de coffre à bagages ou du revêtement de plancher de chargement présente une surface tridimensionnelle à structure aiguilletée, résistante à l'usure, fabriquée selon le procédé de la revendication 1.
